# EUROPEAN PATENT SPECIFICATION

(11) **EP 3 477 133 B1**
(45) Date of publication and mention of the grant of the patent: **24.03.2021**
(21) Application number: 18202691.4
(22) Date of filing: 25.10.2018
(51) Int. Cl.: F16C 27/04, F01D 25/16, F16C 41/00

(54) **DAMPER ASSEMBLY FOR GAS TURBINE ENGINES**
DÄMPFUNGSANORDNUNG FÜR EINEN GASTURBINENMOTOR
DISPOSITIF D'AMORTISSEMENT POUR MOTEUR À TURBINE À GAZ

(30) Priority: 25.10.2017 US 201715793338
(43) Date of publication of application: 01.05.2019
(73) Proprietor: Raytheon Technologies Corporation, Farmington, CT 06032 (US)
(72) Inventor: DUFFY, Kevin, Hartford, CT Connecticut 06105 (US)
(74) Representative: Dehns

(56) References cited:
- EP-A1- 3 067 579
- DE-A1- 2 248 439
- FR-A1- 2 965 858
- US-A- 5 344 239
- US-A1- 2004 022 463

## Description

### BACKGROUND

This application relates to damping for a gas turbine engine, including damping rotatable components during engine operation.

Gas turbine engines are known, and typically include a fan delivering air into a low pressure compressor section. The air is compressed in the low pressure compressor section, and passed into a high pressure compressor section. From the high pressure compressor section the air is introduced into a combustor section where it is mixed with fuel and ignited. Products of this combustion pass downstream over a high pressure turbine section, and then a low pressure turbine section to extract energy for driving the fan.

One or more bearings may support a rotatable shaft that couples the high/low compressor section or fan and the high/low turbine section. The rotatable shaft may experience vibration during operation of the engine.

US 5 344 239 A discloses a damper assembly according to the preamble of claim 1, and a gas turbine engine according to the preamble of claim 5.

EP 3 067 579 A1 discloses a bearing arrangement for a gas turbine engine with two rolling bearings and a centering spring integral with both outer rings.

### SUMMARY

According to a first aspect of the present invention, there is provided a damper assembly as set forth in claim 1.

In an embodiment of the above, each of the first valve and the second valve meters flow of fluid between a fluid source and a respective one of the first and second fluid passages.

In a further embodiment of any of the foregoing embodiments, the first and second valves are movable to define third and fourth operating modes. The third operating mode is a low damping mode, and the fourth operating mode is a medium damping mode.

A further embodiment of any of the foregoing embodiments includes a controller coupled to the first and second valves, the controller operable to move the first and second valves between the first through fourth operating modes.

In a further embodiment of any of the foregoing embodiments, the first annular damper cavity defines a first volume, and the second annular damper cavity defines a second volume that differs from the first volume.

In a further embodiment of any of the foregoing embodiments, the first and second fluid passages deliver lubricant to the first and second annular damper cavities.

In a further embodiment of any of the foregoing embodiments, one of the first and second housings is mechanically attached to a static structure, and another one of the first and second housings supports a bearing assembly. A spring member has an elongated body extending between a first end and a second end. The first end mechanically attaches to the first housing, and the second end extends from the second housing, and the body has a plurality of elongated beams that permit movement of the second housing relative to an axis defined by the rotatable gas turbine engine component.

In a further embodiment of any of the foregoing embodiments, the bearing assembly supports the rotatable gas turbine engine component. The rotatable gas turbine engine component is a rotatable shaft coupled to a turbine.

According to a further aspect of the present invention, there is provided a gas turbine engine as set forth in claim 5.

In the first example of the invention flow of fluid through the first fluid passage causes the rotatable shaft to be dampened at a first rate, and flow of fluid through the second fluid passage causes the rotatable shaft to be dampened at a second, different rate.

In a further embodiment of any of the foregoing embodiments, the first and second fluid passages deliver lubricant to the first and second annular damper cavities.

In a further embodiment of any of the foregoing embodiments, one of the first and second housings is mechanically attached to a static structure, and another one of the first and second housings supports a bearing assembly that receives the rotatable shaft.

In a further embodiment of any of the foregoing embodiments, the first fluid passage is coupled to a first valve, the second fluid passage is coupled to a second valve, and the first and second valves are movable to define at least first, second, third and fourth operating modes. The first operating mode is a high damping mode, the second operating mode is a non-damping mode, the third operating mode is a low damping mode, and the fourth operating mode is a medium damping mode.

In a further embodiment of any of the foregoing embodiments, each of the first valve and the second valve meters flow of fluid between a fluid source and a respective one of the first and second fluid passages.

A further embodiment of any of the foregoing embodiments includes a controller coupled to the first and second valves, the controller operable to move the first and second valves between the first through fourth operating modes.

According to a further aspect of the present invention, there is provided a method as set forth in claim 11.

In the second example of the invention the first annular damper cavity defines a first volume, and the second annular damper cavity defines a second volume that differs from the first volume.

A further embodiment of any of the foregoing embodiments includes permitting flow of fluid through both the first fluid passage and the second fluid passage such that the rotatable component is dampened at a second rate that differs from the first rate.

In a further embodiment of any of the foregoing embodiments, a first valve meters flow of fluid through the first fluid passage, and a second valve meters flow of fluid through the second fluid passage. One of the first and second housings defines the first and second fluid passages. Another one of the first and second housings defines first, second and third annular grooves that receive respective first, second and third seal members. The first and second housings define the first annular damper cavity between the first and second seal members, and define the second annular damper cavity between the second and third seal members.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a gas turbine engine.
Figure 2A illustrates a damper assembly according to a first example of the invention.
Figure 2B illustrates the damper assembly along line 2B-2B of Figure 2A.
Figure 2C illustrates a perspective view of a spring member for the damper assembly of Figure 2A.
Figure 3 illustrates a damper assembly according to a second example of the invention.

Like reference numbers and designations in the various drawings indicate like elements.

### DETAILED DESCRIPTION

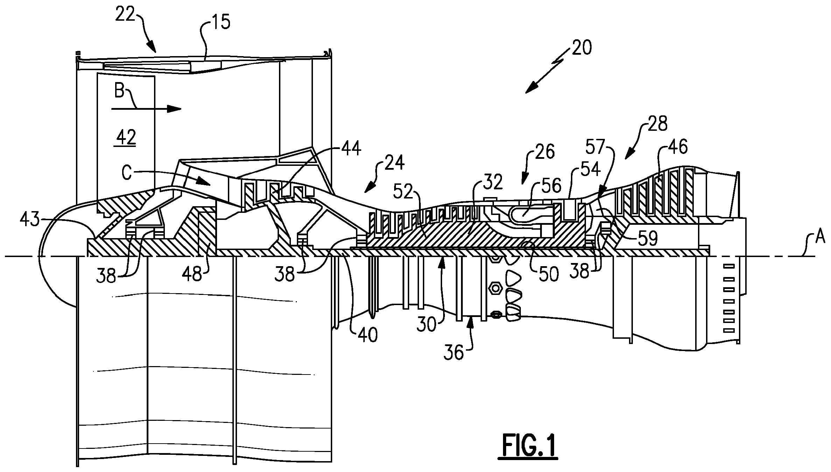

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x ⁹/₅). The "Low corrected fan tip speed" as disclosed herein according to one non-limiting embodiment is less than about 1150 ft / second (350.5 meters/second).

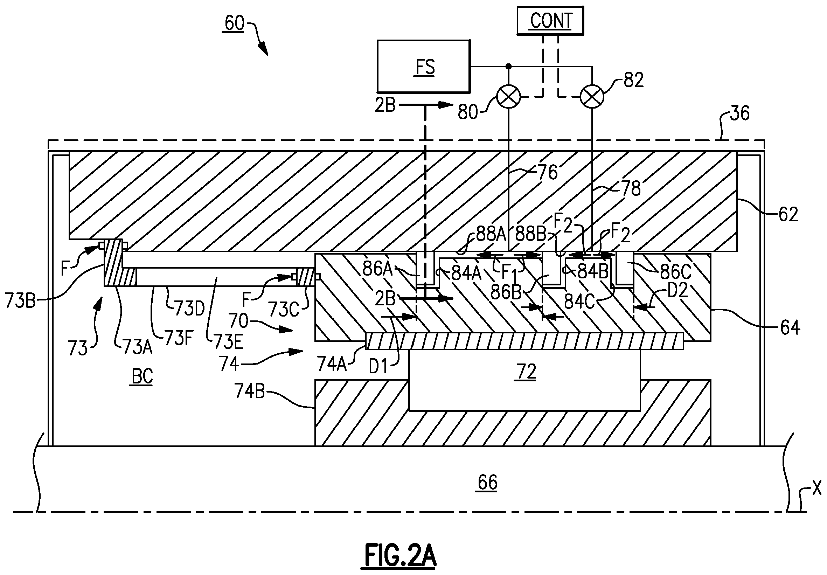

Figures 2A-2B illustrate a variable squeeze damper assembly 60 according to one example of he invention. The damper assembly 60 is operable to provide variable levels or rates of damping to components which may experience undesirable vibration and/or misalignment during operation, such as one or more components of the engine 20 of Figure 1. The damper assembly 60 can be configured to control load, displacement, critical speed and rotor strain energy, for example.

The damper assembly 60 includes a first housing 62 adjacent to a second housing 64. The second housing 64 supports a rotatable gas turbine engine component 66. Each of the first and second housings 62, 64 and the rotatable component 66 extend along an axis X. The axis X can be collinear or parallel with the engine axis A of Figure 1, for example. In some examples, the rotatable component 66 is a hub or a rotatable shaft coupled to a turbine or compressor, such as one of the shafts 40, 50 of the engine 20 of Figure 1. In another example, the rotatable component 66 is a fan hub 43 interconnecting the fan 42 with geared architecture 48 and low pressure turbine 46 of Figure 1.

In the illustrated example of Figures 2A-2B, the first and second housing 62, 64 are located in, or otherwise define portions of, a bearing compartment BC. The bearing compartment BC houses a bearing assembly 70 that supports the rotatable component 66. The bearing assembly 70 and bearing compartment BC may be incorporated in any of the bearing systems 38 of Figure 1, for example. One of the first and second housings 62, 64, such as the first housing 62 in Figure 2A, is mechanically attached to a static structure, such as the engine static structure 36 of Figure 1 (and shown in dashed lines in Figure 2A), for example. Another one of the first and second housings 62, 64, such as the second housing 64 in Figure 2A, supports portions of the bearing assembly 70.

The bearing assembly 70 includes one or more bearing rolling elements 72 (one shown for illustrative purposes) and a carrier 74 having an outer ring 74A and an inner ring 74B. The bearing rolling elements 72 can be rollers or balls, for example. The second housing 64 is mechanically attached to the outer ring 74A. In other examples, the outer ring 74A is incorporated into or integral with the second housing 64. The inner ring 74B is fixedly attached or otherwise coupled to the rotatable component 66 and cooperates with the outer ring 74A to carry the bearing rolling element 72. The housing 64 defines a load path between the bearing rolling element 72 and the first housing 62.

The damper assembly 60 can include a centering spring member 73 for supporting the first housing 64. The spring member 73 includes a body 73A extending between a pair of opposed ends 73B, 73C. The body 73A can have a generally cylindrical profile. End 73C of the spring member 73 extends from the second housing 64. The spring member 73 and the second housing 64 can be can be integrally formed or can be separate and distinct components. In the illustrated example of Figure 2A, ends 73B, 73C are mechanically attached or otherwise secured to the first and second housings 62, 64 with one or more fasteners F, for example, such that the second housing 64 is supported by the first housing 62. End 73B can define a flange extending radially outward to engage the first housing 62.

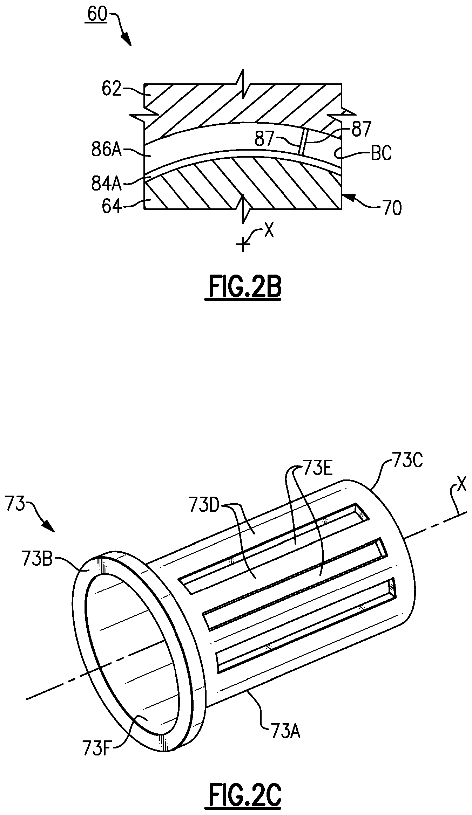

The spring member 73 can be made of a relatively flexible material. Example materials include a metal or alloy such as titanium or steel. As illustrated in Figure 2C, the body 73A of the spring member 73 includes a plurality of elongated beams 73D that define a plurality of windows or openings 73E, and provide a desired amount of flexibility to permit movement of the second housing 64 and center the second housing 64 relative to the axis X. The spring member 73 defines an elongated bore 73F extending between the ends 73B, 73C. In some examples, the body 73A defines between a total of 20 to 30 of the openings 73E (three shown in Figure 2C for illustrative purposes), although fewer or more openings 73E may be utilized. During operation, the beams 73D bias the end 73C toward the axis X such that spring member 73 opposes movement of the second housing 64 away from the axis X, but the beams 73D can flex such that the spring member 73 permits some radial movement of the second housing 64 to relative to the first housing 62.

The first housing 62 defines first and second fluid passages 76, 78. The first fluid passage 76 is coupled to a first valve 80. The second fluid passage 78 is coupled to a second valve 82. Each of the first and second valves 80, 82 meters flow of fluid between a fluid source FS and respective one of the first and second fluid passages 76, 78. The fluid source FS can supply a quantity of lubricant to the bearing compartment BC.

The second housing 64 defines first, second, and third annular grooves 84A-84C that extend inwardly from radially outer surfaces of the second housing 64. The first, second, and third annular grooves 84A-84C receive respective seal members 86A-86C. In some examples, each of the seal members is an O-ring. In the illustrated example of Figures 2A and 2B, the seal members 86A-86C are piston rings received within the first, second, and third annular grooves. Each of the seal members 86A-86C extends about the axis X to define a substantially ring-shaped or annular geometry. The seal members 86A-86C can be made of a high temperature metal or alloy, or can be made of a composite material, for example. Each of the seal members 86A-86C may be a split ring with a distinct pair of ends 87 (Figure 2B) to permit flexing of the seal members 86A-86C. In other examples, the each of the seal members 86A-86C is a full hoop that is deformable to permit flexing. The seal members 86A-86C seal against radially inner surfaces of the first housing 62.

The first and second housing 62, 64 are arranged in spaced relationship relative to each other to define a first annular damper cavity 88A and a second annular damper cavity 88B each swept about the axis X to define a substantially annular geometry. Each of the cavities 88A, 88B extends about a circumference of the second housing 64. The first cavity 88A is defined between the first and second seal members 86A, 86B and is in fluid communication with the first fluid passage 76. The second cavity 88B is defined between second and third seal members 86B, 86C and is in fluid communication with the second fluid passage 78.

The first and second fluid passages 76, 78 deliver flow of fluid to the first and second cavities 88A, 88B. In the illustrated example, the fluid is a lubricant which is supplied by the fluid source FS and delivered by the first and second fluid passages 76, 78 to the first and second cavities 88A, 88B. Fluid delivered by the first and second fluid passages 76, 78 to the respective first and second cavities 88A, 88B can be pressurized to provide a desired amount of dampening of the rotatable component 66. The lubricant establishes a viscous film in the first and second cavities 88A, 88B that opposes relative movement between the first and second housings 62, 64 by absorbing energy from the rotating component 66 due to displacement relative to the axis X. In some examples, the second valve 82 is omitted such that the second cavity 88B is substantially continuously pressurized during operation.

Each of the first and second cavities 88A, 88B can be dimensioned to provide relatively different rates or levels of damping. For example, flow of fluid through the first fluid passage 76 and into the first cavity 88A causes the rotatable component 66 to be dampened at a first rate, and flow of fluid through the second fluid passage 78 and into the second cavity 88B causes the rotatable component 66 to be dampened at a second, different rate.

The first cavity 88A defines a first volume and the second cavity 88B defines a second volume. In the illustrated example, the first volume differs from the second volume. For example, the first volume can be greater or less than the second volume. In alternative examples, the first volume is equal to the second volume. The different volumes of the first and second cavities 88A, 88B provide different rates or levels of damping of the rotatable component 66.

The axial length and radial height of the first and second cavities 88A, 88B can differ to define the respective first and second volumes. In one example, the first and second seal members 86A, 86B are axially spaced apart relative to the axis X such that the first cavity 88A extends along a first distance D1 (Figure 2A) relative to the axis X. The second and third seal members 86B, 86C are axially spaced apart relative to the axis X such that the second cavity 88B extends along a second, different distance D2 (Figure 2A) relative to the axis X. For the purposes of this disclosure, the first and second distances D1, D2 are defined with respect to the first, second and third seal members 86A-86C being in a sealing relationship relative to respective grooves 84A-84C.

A controller CONT is coupled to the first and second valves 80, 82 to provide different levels or rates of damping. The controller CONT is operable to actuate or otherwise move each of the first and second valves 80, 82 simultaneously or independently of each other in various combinations. For example, the controller CONT can move each of the valves 80, 82 between a fully open position and a fully closed position to selectively meter flow of fluid between the fluid source FS and each of the respective first and second fluid passages 76, 78. In further examples, the controller CONT can move each of the first and second valves 80, 82 between one or more intermediate positions to selectively meter flow of fluid to each of the respective fluid passages 76, 78.

The first and second valves 80, 82 are moveable to define at least first and second operating modes. The first operating mode may correspond to a high damping mode, and the second operating mode may correspond to a non-damping mode. For example, both of the first and second valves 80, 82 may be moved to a fully open position to permit flow of fluid through the first and second fluid passages 76, 78 and into each of the first and second cavities 88A, 88B to dampen at a first level or rate in the high damping mode. The first and second valves 80, 82 may each be moved to a fully closed position to block flow of fluid through the fluid passages 76, 78 and into each of the cavities 88A, 88B to dampen at a second, different level or rate to provide a relatively low level damping or no damping during the non-damping mode.

The first and second valves 80, 82 can be modulated by the controller CONT to provide more than two levels or rates of damping. For example, the valves 80, 82 can be moveable to define third and fourth operating modes. The third operating mode may be a low damping mode, and the fourth operating mode may be a medium damping mode, for example. During the third operating mode, the first valve 80 can be moved to a fully closed position to block flow of fluid through the first fluid passage 76, and the second valve 82 can be moved to a fully opened position to permit flow of fluid through the second fluid passage 78 to dampen at a third level or rate that differs from the first and second rates. During the fourth operating mode, the first valve 80 can be moved to a fully open position to permit flow of fluid through the first fluid passage 76, and the second valve 82 can be moved to a fully closed position to block flow of fluid through the second fluid passage 78 to dampen at a fourth level or rate that differs from the first through third rates. Intermediate positions of the first and second valves 80, 82 can define additional operating modes and corresponding levels or rates of damping.

The controller CONT is operable to move the first and second valves 80, 82 between at least the first through fourth operating modes, as well as operating modes defined by intermediate positions of the valves 80, 82. Each of the operating modes may correspond to different expected levels of vibration or misalignment of the rotatable component 66 that may be experienced during operation of the engine 20. The high damping mode may correspond to a takeoff condition or a bowed rotor start condition, and the non-damping mode may correspond to a cruise condition of the engine 20, for example. The relatively lesser levels or rates of damping can reduce parasitic losses that may otherwise result from supply of fluid by the fluid source FS to the first and second cavities 88A, 88B during conditions when relatively lesser levels of vibration are expected.

The level(s) of damping may also be defined with respect to a location of the damper assembly 60. For example, a damper assembly 60 incorporated into bearing compartment 38 adjacent fan hub 43 in the engine 20 of Figure 1 can have a damping schedule that differs from a damper assembly 60 incorporated into bearing compartment 38 that supports one of the shafts 40, 50. In another example, a damper assembly 60 incorporated into a bearing compartment 38 at a first location along one of the shafts 40, 50 can have a damping schedule that differs from a damper assembly 60 incorporated into a bearing compartment 38 at a second, different location along the respective one of the shafts 40, 50. The controller CONT can be programmed with logic to actuate the valves 80, 82 according to each damper schedule and corresponding sets of operating modes.

During operation, flow of fluid between the fluid source FS and the first fluid passage 76 causes fluid F1 (Figure 2A) to move through the first cavity 88A and toward the first seal member 86A to cause the seal member 86A to abut against surfaces of the first groove 84A and the radially inner surfaces of the first housing 62 to establish a sealing relationship. Fluid between the fluid source FS and the second fluid passage 78 causes flow of fluid F2 (Figure 2A) to be communicated to the second cavity 88B to cause the third seal member 86C to abut against surfaces of the third groove 84C and against the radially inner surfaces of the first housing 62. The fluid F2 may also cause the second seal member 86B to abut against opposed surfaces of the second groove 84B and against the radially inner surfaces of the first housing 62. In other examples, the fluid F1 is at a relatively greater pressure than fluid F2 such that the fluid F1 causes the second seal member 86B to abut against opposed surfaces of the second groove 84B.

When the first and/or second valve 80, 82 is located in a closed position, respective fluid F1, F2 may migrate or leak past the respective seal members 86A, 86C and into another portion of the bearing compartment BC to achieve an ambient pressure in the respective cavities 88A, 88B. Leakage of the fluid F1, F2 from the respective cavities 88A, 88B can also improve lubricant turnover and reduce undesirably high temperatures that may otherwise be caused by stagnant lubricant in the cavities 88A, 88B.

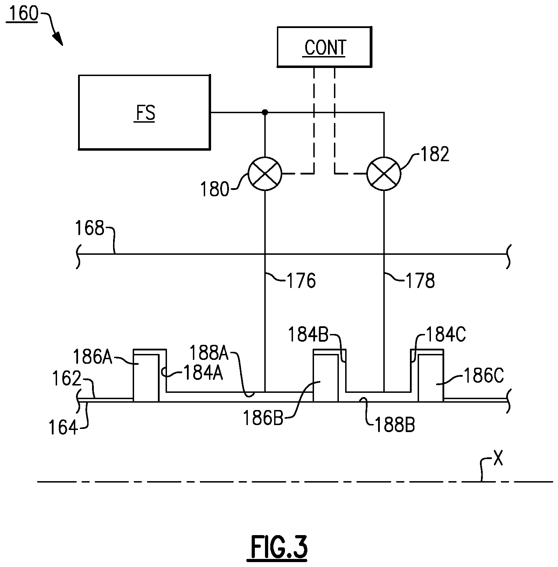

Figure 3 illustrates a damper assembly 160 according to a second example of the invention. In this disclosure, like reference numerals designate like elements where appropriate and reference numerals with the addition of one-hundred or multiples thereof designate modified elements that are understood to incorporate the same features and benefits of the corresponding original elements. The first housing 162 defines first, second, and third annular grooves 184A-184C. Seal members 186A-186C abut against radially outer surfaces of second housing 164 to establish a sealing relationship in response to pressurization of respective first and second annular cavities 188A, 188B. The damper assembly 160 includes at least a first valve 180 coupled to a first fluid passage 176. The damper assembly can include a second valve 182 (shown in dashed lines) coupled to a second fluid passage 178. In some examples, the second valve 182 is omitted such that the second cavity 188B is substantially continuously pressurized during operation.

The controller CONT typically includes a processor, a memory and an interface. The processor may, for example only, be any type of known microprocessor having desired performance characteristics. The memory may, for example only, includes UVPROM, EEPROM, FLASH, RAM, ROM, DVD, CD, a hard drive, or other computer readable medium which may store data and the method for operation of the controller CONT of this description. The interface facilitates communication with the other systems or components of the engine 20 or aircraft, for example. In some embodiments, the controller CONT is a portion of the FADEC or EEC, another system, or a stand-alone system.

It should be understood that relative positional terms such as "forward," "aft," "upper," "lower," "above," "below," and the like are with reference to the normal operational attitude of the vehicle and should not be considered otherwise limiting.

Although the different examples have the specific components shown in the illustrations, embodiments of this disclosure are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present disclosure.

## Claims

1. A damper assembly (60;160) comprising:
a first housing (62;162) adjacent to a second housing (64;164) that supports a rotatable gas turbine engine component (66), wherein the first housing (62;162) defines first and second fluid passages (76,78;176,178), the first fluid passage (76;176) is coupled to a first valve (80;180), one of the first and second housings (62,64;162,164) defines first, second and third annular grooves (84A,84B,84C;184A,184B,184C) that receive respective first, second and third seal members (86A,86B,86C;186A,186B,186C), and the first and second housings (62,64;162,164) define a first annular damper cavity (88A;188A) between the first and second seal members (86A,86B;186A,186B) and in fluid communication with the first fluid passage (76;176), and define a second annular damper cavity (88B;188B) between the second and third seal members (86B,86C;186B,186C) and in fluid communication with the second fluid passage (78;178), **characterised in that**:
the second fluid passage (78;178) is coupled to a second valve (82;182), and the first and second valves (80,82;180,182) are movable to define at least first and second operating modes, the first operating mode being a high damping mode, and the second operating mode being a non-damping mode.

2. The damper assembly (60;160) as recited in claim 1, wherein the first annular damper cavity (88A;188A) defines a first volume, and the second annular damper cavity (88B;188B) defines a second volume different from the first volume.

3. The damper assembly (60;160) as recited in claim 1 or 2, wherein one of the first and second housings (62,64;162,164) is mechanically attached to a static structure (36), another one of the first and second housings (62,64;162,164) supports a bearing assembly (70), and the damper assembly (60;160) further comprises a spring member (73) including an elongated body (73A) extending between a first end (73B) and a second end (73C), the first end (73B) mechanically attached to the first housing (62;162), and the second end (73C) extending from the second housing (64;164), and the elongated body (73A) including a plurality of elongated beams (73D) that permit movement of the second housing (64;164) relative to an axis (x) defined by the rotatable gas turbine engine component (66), optionally wherein the bearing assembly (70) supports the rotatable gas turbine engine component (66), the rotatable gas turbine engine component (66) being a rotatable shaft coupled to a turbine.

4. The damper assembly (60;160) as recited in any preceding claim, wherein the first and second valves (80,82;180,182) are movable to define third and fourth operating modes, the third operating mode being a low damping mode, and the fourth operating mode being a medium damping mode.

5. A gas turbine engine (20) comprising:
a fan section (22) including a plurality of fan blades;
a compressor section (24) in fluid communication with the fan section (22);
a turbine section (28) driving the fan section (22) or the compressor section (24) through a rotatable shaft (40,50); and
a damper assembly (60;160) comprising a first housing (62;162) adjacent to a second housing (64;164) supporting the rotatable shaft (40,50), wherein the first housing (62;162) defines first and second fluid passages (76,78;176,178), the first and second housings (62,64;162,164) define a first annular damper cavity (88A;188A) in fluid communication with the first fluid passage (76;176), and define a second annular damper cavity (88B;188B) in fluid communication with the second fluid passage (78;178), the first annular damper cavity (88A;188A) defines a first volume, and the second annular damper cavity (88B;188B) defines a second volume different from the first volume, **characterised in that**:
flow of fluid through the first fluid passage (76;176) causes the rotatable shaft (40,50) to be dampened at a first rate, and flow of fluid through the second fluid passage (78;178) causes the rotatable shaft (40,50) to be dampened at a second, different rate.

6. The gas turbine engine (20) as recited in claim 5, wherein one of the first and second housings (62,64;162,164) is mechanically attached to a static structure (36), and another one of the first and second housings (62,64;162;164) supports a bearing assembly (70) that receives the rotatable shaft (40,50).

7. The gas turbine engine (20) as recited in any of claims 5 or 6, wherein the first fluid passage (76;176) is coupled to a first valve (80;180), the second fluid passage (78;178) is coupled to a second valve (82;182), and the first and second valves (80,82;180,182) are movable to define at least first, second, third and fourth operating modes, the first operating mode being a high damping mode, the second operating mode being a non-damping mode, the third operating mode being a low damping mode, and the fourth operating mode being a medium damping mode.

8. The damper assembly (60;160) or gas turbine engine (20) as recited in any of claims 1 to 4 or 7, wherein each of the first valve (80;180) and the second valve (82;182) meters flow of fluid between a fluid source (FS) and a respective one of the first and second fluid passages (76,78;176,178).

9. The damper assembly (60;160) or gas turbine engine (20) as recited in any of claims 1 to 4, 7 or 8, comprising a controller coupled to the first and second valves (80,82;180,182), the controller operable to move the first and second valves (80,82;180,182) between the first through fourth operating modes.

10. The damper assembly (60;160) or gas turbine engine (20) as recited in any preceding claim, wherein the first and second fluid passages (76,78;176,178) deliver lubricant to the first and second annular damper cavities (88A,88B;188A,188B).

11. A method of damping a rotatable component (66) of a gas turbine engine (20), comprising permitting flow of fluid through a first fluid passage (76;176) between a fluid source (FS) and a first annular damper cavity (88A;188A), but blocking flow of fluid through a second fluid passage (78;178) between the fluid source (FS) and a second annular damper cavity (88B;188B) such that the rotatable component (66) is dampened at a first rate, wherein each of the first annular damper cavity (88A;188A) and the second annular damper cavity (88B;188B) is defined between a first housing (62;162) and a second housing (64;164) that supports the rotatable component (66), wherein the first annular damper cavity (88A;188A) defines a first volume, and the second annular damper cavity (88B;188B) defines a second volume different from the first volume.

12. The method as recited in claim 11, further comprising permitting flow of fluid through both the first fluid passage (76;176) and the second fluid passage (78;178) such that the rotatable component (66) is dampened at a second rate different from the first rate.

13. The method as recited in claim 11 or 12, wherein a first valve (80;180) meters flow of fluid through the first fluid passage (76;176), a second valve (82;182) meters flow of fluid through the second fluid passage (78;178), one of the first and second housings (62,64;162,164) defines the first and second fluid passages (76,78;176,178), another one of the first and second housings (62,64;162,164) defines first, second and third annular grooves (84A,84B,84C;184A,184B,184C) that receive respective first, second and third seal members (86A,86B,86C;186A,186B,186C), and the first and second housings (62,64;162,164) define the first annular damper cavity (88A;188A) between the first and second seal members (86A,86B;186A,186B), and define the second annular damper cavity (88B;188B) between the second and third seal members (86B,86C;186B,186C).

## Patentansprüche

1. Dämpfungsanordnung (60;160), umfassend:
ein erstes Gehäuse (62;162), angrenzend an ein zweites Gehäuse (64;164), das eine drehbare Gasturbinentriebwerkskomponente (66) trägt, wobei das erste Gehäuse (62;162) einen ersten und zweiten Fluiddurchgang (76,78;176,178) definiert, wobei der erste Fluiddurchgang (76;176) an ein erstes Ventil (80;180) gekoppelt ist, wobei eines des ersten und zweiten Gehäuses (62,64;162,164) eine erste, zweite und dritte ringförmige Nut (84A,84B,84C;184A,184B,184C) definiert, die ein jeweiliges erstes, zweites und drittes Dichtungselement (86A,86B,86C;186A,186B,186C) empfangen, und wobei das erste und zweite Gehäuse (62,64;162,164) einen ersten ringförmigen Dämpfungshohlraum (88A;188A) zwischen dem ersten und zweiten Dichtungselement (86A,86B;186A,186B) und in Fluidkommunikation mit dem ersten Fluiddurchgang (76;176) definieren und einen zweiten ringförmigen Dämpfungshohlraum (88B;188B) zwischen dem zweiten und dritten Dichtungselement (86B,86C;186B,186C) und in Fluidkommunikation mit dem zweiten Fluiddurchgang (78;178) definieren, **dadurch gekennzeichnet, dass**:
der zweite Fluiddurchgang (78;178) an ein zweites Ventil (82;182) gekoppelt ist, und das erste und zweite Ventil (80,82;180,182) bewegbar sind, um mindestens einen ersten und zweiten Betriebsmodus zu definieren, wobei der erste Betriebsmodus ein starker Dämpfungsmodus ist, und wobei der zweite Betriebsmodus ein Nicht-Dämpfungsmodus ist.

2. Dämpfungsanordnung (60;160) nach Anspruch 1, wobei der erste ringförmige Dämpfungshohlraum (88A;188A) ein erstes Volumen definiert und der zweite ringförmige Dämpfungshohlraum (88B;188B) ein zweites Volumen definiert, das sich von dem ersten Volumen unterscheidet.

3. Dämpfungsanordnung (60;160) nach Anspruch 1 oder 2, wobei eines des ersten und zweiten Gehäuses (62,64;162,164) mechanisch an einer statischen Struktur (36) befestigt ist, ein anderes des ersten und zweiten Gehäuses (62,64;162,164) eine Lageranordnung (70) trägt und die Dämpfungsanordnung (60;160) ferner ein Federelement (73) umfasst, das einen länglichen Körper (73A), der sich zwischen einem ersten Ende (73B) und einem zweiten Ende (73C) erstreckt, beinhaltet, wobei das erste Ende (73B) mechanisch an dem ersten Gehäuse (62;162) befestigt ist, und wobei sich das zweite Ende (73C) von dem zweiten Gehäuse (64;164) erstreckt, und wobei der längliche Körper (73A) eine Vielzahl von länglichen Balken (73D) beinhaltet, die eine Bewegung des zweiten Gehäuses (64;164) in Bezug auf eine Achse (x) gestattet, die durch die drehbare Gasturbinentriebwerkskomponente (66) definiert ist, wobei die Lageranordnung (70) optional die drehbare Gasturbinentriebwerkskomponente (66) trägt, wobei die drehbare Gasturbinentriebwerkskomponente (66) eine drehbare Welle ist, die an eine Turbine gekoppelt ist.

4. Dämpfungsanordnung (60;160) nach einem der vorhergehenden Ansprüche, wobei das erste und zweite Ventil (80,82;180,182) bewegbar sind, um einen dritten und vierten Betriebsmodus zu definieren, wobei der dritte Betriebsmodus ein schwacher Dämpfungsmodus ist, und wobei der vierte Betriebsmodus ein mittelstarker Dämpfungsmodus ist.

5. Gasturbinentriebwerk (20), umfassend:
einen Gebläseabschnitt (22), der eine Vielzahl von Gebläseschaufeln beinhaltet;
einen Verdichterabschnitt (24) in Fluidkommunikation mit dem Gebläseabschnitt (22);
einen Turbinenabschnitt (28), der den Gebläseabschnitt (22) oder den Verdichterabschnitt (24) durch eine drehbare Welle (40,50) antreibt; und
eine Dämpfungsanordnung (60;160), die ein erstes Gehäuse (62;162) angrenzend an das zweite Gehäuse (64;164), das die drehbare Welle (40,50) trägt, umfasst, wobei das erste Gehäuse (62;162) einen ersten und zweiten Fluiddurchgang (76,78;176,178) definiert, wobei das erste und zweite Gehäuse (62,64;162,164) einen ersten ringförmigen Dämpfungshohlraum (88A;188A) in Fluidkommunikation mit dem ersten Fluiddurchgang (76;176) definieren und einen zweiten ringförmigen Dämpfungshohlraum (88B;188B) in Fluidkommunikation mit dem zweiten Fluiddurchgang (78;178) definieren, wobei der erste ringförmige Dämpfungshohlraum (88A;188A) ein erstes Volumen definiert und der zweite ringförmige Dämpfungshohlraum (88B;188B) ein zweites Volumen definiert, das sich von dem ersten Volumen unterscheidet, **dadurch gekennzeichnet, dass**:
ein Fluidstrom durch den ersten Fluiddurchgang (76;176) herbeiführt, dass die drehbare Welle (40,50) mit einer ersten Geschwindigkeit gedämpft wird, und ein Fluidstrom durch den zweiten Fluiddurchgang (78;178) herbeiführt, dass die drehbare Welle (40,50) mit einer zweiten, anderen Geschwindigkeit gedämpft wird.

6. Gasturbinentriebwerk (20) nach Anspruch 5, wobei eines des ersten und zweiten Gehäuses (62,64;162,164) mechanisch an einer statischen Struktur (36) befestigt ist und ein anderes des ersten und zweiten Gehäuses (62,64;162,164) eine Lageranordnung (70) trägt, die die drehbare Welle (40,50) empfängt.

7. Gasturbinentriebwerk (20) nach einem der Ansprüche 5 oder 6, wobei der erste Fluiddurchgang (76;176) an ein erstes Ventil (80;180) gekoppelt ist, der zweite Fluiddurchgang (78;178) an ein zweites Ventil (82;182) gekoppelt ist und das erste und zweite Ventil (80,82;180,182) bewegbar sind, um mindestens einen ersten, zweiten, dritten und vierten Betriebsmodus zu definieren, wobei der erste Betriebsmodus ein starker Dämpfungsmodus ist, der zweite Betriebsmodus ein Nicht-Dämpfungsmodus ist, der dritte Betriebsmodus ein schwacher Dämpfungsmodus ist und der vierte Betriebsmodus ein mittelstarker Dämpfungsmodus ist.

8. Dämpfungsanordnung (60;160) oder Gasturbinentriebwerk (20) nach einem der Ansprüche 1 bis 4 oder 7, wobei jedes des ersten Ventils (80;180) und des zweiten Ventils (82;182) den Fluidstrom zwischen einer Fluidquelle (FS) und einem jeweiligen des ersten und zweite Fluiddurchgangs (76,78;176,178) misst.

9. Dämpfungsanordnung (60;160) oder Gasturbinentriebwerk (20) nach einem der Ansprüche 1 bis 4, 7 oder 8, umfassend eine Steuerung, die an das erste und zweite Ventil (80,82;180,182) gekoppelt ist, wobei die Steuerung betrieben werden kann, um das erste und zweite Ventil (80,82;180,182) zwischen dem ersten bis vierten Betriebsmodus zu bewegen.

10. Dämpfungsanordnung (60;160) oder Gasturbinentriebwerk (20) nach einem der vorhergehenden Ansprüche, wobei der erste und zweite Fluiddurchgang (76,78;176,178) Schmiermittel in den ersten und zweiten ringförmigen Dämpfungshohlraum (88A,88B;188A,188B) leiten.

11. Verfahren zur Dämpfung einer drehbaren Komponente (66) eines Gasturbinentriebwerks (20), umfassend ein Ermöglichen von Fluidstrom durch einen ersten Fluiddurchgang (76;176) zwischen einer Fluidquelle (FS) und einem ersten ringförmigen Dämpfungshohlraum (88A;188A), aber Blockieren von Fluidstrom durch einen zweiten Fluiddurchgang (78;178) zwischen der Fluidquelle (FS) und einem zweiten ringförmigen Dämpfungshohlraum (88B;188B), sodass die drehbare Komponente (66) mit einer ersten Geschwindigkeit gedämpft wird, wobei jeder des ersten ringförmigen Dämpfungshohlraums (88A;188A) und des zweiten ringförmigen Dämpfungshohlraums (88B;188B) zwischen einem ersten Gehäuse (62;162) und einem zweiten Gehäuse (64;164), das die drehbare Komponente (66) trägt, definiert ist, wobei der erste ringförmige Dämpfungshohlraum (88A;188A) ein erstes Volumen definiert und der zweite ringförmige Dämpfungshohlraum (88B;188B) ein zweites Volumen definiert, das sich von dem ersten Volumen unterscheidet.

12. Verfahren nach Anspruch 11, ferner umfassend ein Ermöglichen von Fluidstrom durch sowohl den ersten Fluiddurchgang (76;176) als auch den zweiten Fluiddurchgang (78;178), sodass die drehbare Komponente (66) mit einer zweiten Geschwindigkeit gedämpft wird, die sich von der ersten Geschwindigkeit unterscheidet.

13. Verfahren nach Anspruch 11 oder 12, wobei ein erstes Ventil (80;180) den Fluidstrom durch den ersten Fluiddurchgang (76;176) misst, ein zweites Ventil (82;182) den Fluidstrom durch den zweiten Fluiddurchgang (78;178) misst, wobei eines des ersten und zweiten Gehäuses (62,64;162,164) den ersten und zweiten Fluiddurchgang (76,78;176,178) definiert, ein anderes des ersten und zweiten Gehäuses (62,64;162,164) die erste, zweite und dritte ringförmige Nut (84A,84B,84C;184A,184B,184C), die ein jeweils erstes, zweites und drittes Dichtungselement (86A,86B,86C;186A,186B,186C) empfangen, definiert und das erste und zweite Gehäuse (62,64;162,164) den ersten ringförmigen Dämpfungshohlraum (88A;188A) zwischen dem ersten und zweiten Dichtungselement (86A,86B;186A,186B) definieren und den zweiten ringförmigen Dämpfungshohlraum (88B;188B) zwischen dem zweiten und dritten Dichtungselement (86B,86C;186B,186C) definieren.

## Revendications

1. Dispositif d'amortissement (60;160) comprenant :
un premier boîtier (62;162) adjacent à un second boîtier (64;164) qui supporte un composant de moteur à turbine à gaz rotatif (66), dans lequel le premier boîtier (62;162) définit des premier et second passages de fluide (76,78;176,178), le premier passage de fluide (76 ;176) est couplé à une première soupape (80;180), l'un des premier et second boîtiers (62,64; 162,164) définit des première, deuxième et troisième rainures annulaires (84A,84B,84C;184A,184B,184C) qui reçoivent des premier, deuxième et troisième éléments de joint (86A,86B,86C; 186A,186B,186C) respectifs, et les premier et second boîtiers (62,64;162,164) définissent une première cavité d'amortissement annulaire (88A;188A) entre les premier et deuxième éléments de joint (86A,86B;186A,186B) et en communication fluidique avec le premier passage de fluide (76;176), et définissent une seconde cavité d'amortissement annulaire (88B;188B) entre les deuxième et troisième éléments de joint (86B,86C;186B,186C) et en communication fluidique avec le second passage de fluide (78;178), **caractérisé en ce que** :
le second passage de fluide (78;178) est couplé à une seconde soupape (82;182), et les première et seconde soupapes (80, 82;180,182) sont mobiles pour définir au moins des premier et deuxième modes de fonctionnement, le premier mode de fonctionnement étant un mode d'amortissement élevé, et le deuxième mode de fonctionnement étant un mode sans amortissement.

2. Dispositif d'amortissement (60;160) selon la revendication 1, dans lequel la première cavité d'amortissement annulaire (88A;188A) définit un premier volume, et la seconde cavité d'amortissement annulaire (88B;188B) définit un second volume différent du premier volume.

3. Dispositif d'amortissement (60;160) selon la revendication 1 ou 2, dans lequel l'un des premier et second boîtiers (62,64; 162,164) est fixé mécaniquement à une structure statique (36), un autre des premier et second boîtiers (62,64;162,164) supporte un dispositif de palier (70), et le dispositif d'amortissement (60;160) comprend en outre un élément de ressort (73) comportant un corps allongé (73A) s'étendant entre une première extrémité (73B) et une seconde extrémité (73C), la première extrémité (73B) étant fixée mécaniquement au premier boîtier (62;162) et la seconde extrémité (73C) s'étendant depuis le second boîtier (64;164), et le corps allongé (73A) comportant une pluralité de poutres allongées (73D) qui permettent le déplacement du second boîtier (64;164) par rapport à un axe (x) défini par le composant de moteur à turbine à gaz rotatif (66), éventuellement dans lequel le dispositif de palier (70) supporte le composant de moteur à turbine à gaz rotatif (66), le composant de moteur à turbine à gaz rotatif (66) étant un arbre rotatif couplé à une turbine.

4. Dispositif d'amortissement (60;160) selon une quelconque revendication précédente, dans lequel les première et seconde soupapes (80,82;180,182) sont mobiles pour définir des troisième et quatrième modes de fonctionnement, le troisième mode de fonctionnement étant un mode d'amortissement faible, et le quatrième mode de fonctionnement étant un mode d'amortissement intermédiaire.

5. Moteur à turbine à gaz (20) comprenant :
une section de soufflante (22) comportant une pluralité d'aubes de soufflante ;
une section de compresseur (24) en communication fluidique avec la section de soufflante (22) ;
une section de turbine (28) entraînant la section de soufflante (22) ou la section de compresseur (24) à travers un arbre rotatif (40,50) ; et
un dispositif d'amortissement (60;160) comprenant un premier boîtier (62;162) adjacent à un second boîtier (64; 164) supportant l'arbre rotatif (40,50), dans lequel le premier boîtier (62;162) définit des premier et second passages de fluide (76,78;176,178), les premier et second boîtiers (62,64; 162,164) définissent une première cavité d'amortissement annulaire (88A;188A) en communication fluidique avec le premier passage de fluide (76;176), et définissent une seconde cavité d'amortissement annulaire (88B;188B) en communication fluidique avec le second passage de fluide (78;178), la première cavité d'amortissement annulaire (88A;188A) définit un premier volume, et la seconde cavité d'amortissement annulaire (88B;188B) définit un second volume différent du premier volume, **caractérisé en ce que** :
un écoulement de fluide à travers le premier passage de fluide (76;176) amène l'arbre rotatif (40,50) à être amorti à une première vitesse, et un écoulement de fluide à travers le second passage de fluide (78;178) amène l'arbre rotatif (40,50) à être amorti à une seconde vitesse différente.

6. Moteur à turbine à gaz (20) selon la revendication 5, dans lequel l'un des premier et second boîtiers (62,64;162,164) est fixé mécaniquement à une structure statique (36), et un autre des premier et second boîtiers (62,64;162,164) supporte un dispositif de palier (70) qui reçoit l'arbre rotatif (40,50).

7. Moteur à turbine à gaz (20) selon l'une quelconque des revendications 5 ou 6, dans lequel le premier passage de fluide (76;176) est couplé à une première soupape (80;180), le second passage de fluide (78;178) est couplé à une seconde soupape (82; 182), et les première et seconde soupapes (80,82;180, 182) sont mobiles pour définir au moins des premier, deuxième, troisième et quatrième modes de fonctionnement, le premier mode de fonctionnement étant un mode d'amortissement élevé, le deuxième mode de fonctionnement étant un mode sans amortissement, le troisième mode de fonctionnement étant un mode d'amortissement faible, et le quatrième mode de fonctionnement étant un mode d'amortissement intermédiaire.

8. Dispositif d'amortissement (60;160) ou moteur à turbine à gaz (20) selon l'une quelconque des revendications 1 à 4 ou 7, dans lequel chacune de la première soupape (80;180) et de la seconde soupape (82;182) mesure un écoulement de fluide entre une source de fluide (FS) et un passage de fluide respectif parmi les premier et second passages de fluide (76,78;176,178).

9. Dispositif d'amortissement (60;160) ou moteur à turbine à gaz (20) selon l'une quelconque des revendications 1 à 4, 7 ou 8, comprenant un dispositif de commande couplé aux première et seconde soupapes (80,82;180,182), le dispositif de commande pouvant être utilisé pour déplacer les première et seconde soupapes (80,82;180,182) entre les premier à quatrième modes de fonctionnement.

10. Dispositif d'amortissement (60;160) ou moteur à turbine à gaz (20) selon une quelconque revendication précédente, dans lequel les premier et second passages de fluide (76,78;176,178) délivrent du lubrifiant aux première et seconde cavités d'amortissement annulaires (88A,88B;188A,188B).

11. Procédé d'amortissement d'un composant rotatif (66) d'un moteur à turbine à gaz (20), comprenant l'autorisation d'un écoulement de fluide à travers un premier passage de fluide (76;176) entre une source de fluide (FS) et une première cavité d'amortissement annulaire (88A;188A), mais le blocage d'un écoulement de fluide à travers un second passage de fluide (78;178) entre la source de fluide (FS) et une seconde cavité d'amortissement annulaire (88B;188B) de sorte que le composant rotatif (66) est amorti à une première vitesse, dans lequel chacune de la première cavité d'amortissement annulaire (88A;188A) et de la seconde cavité d'amortissement annulaire (88B;188B) est définie entre un premier boîtier (62;162) et un second boîtier (64;164) qui supporte le composant rotatif (66), dans lequel la première cavité d'amortissement annulaire (88A ;188A) définit un premier volume, et la seconde cavité d'amortissement annulaire (88B ;188B) définit un second volume différent du premier volume.

12. Procédé selon la revendication 11, comprenant en outre l'autorisation d'un écoulement de fluide à travers à la fois le premier passage de fluide (76;176) et le second passage de fluide (78;178) de sorte que le composant rotatif (66) est amorti à une seconde vitesse différente de la première vitesse.

13. Procédé selon la revendication 11 ou 12, dans lequel une première soupape (80;180) mesure un écoulement de fluide à travers le premier passage de fluide (76;176), une seconde soupape (82;182) mesure un écoulement de fluide à travers le second passage de fluide (78;178), l'un des premier et second boîtiers (62,64;162,164) définit les premier et second passages de fluide (76,78;176,178), un autre des premier et second boîtiers (62,64;162,164) définit des première, deuxième et troisième rainures annulaires (84A,84B,84C;184A,184B,184C) qui reçoivent des premier, deuxième et troisième éléments de joint (86A,86B,86C;186A,186B,186C) respectifs, et les premier et second boîtiers (62,64;162,164) définissent la première cavité d'amortissement annulaire (88A;188A) entre les premier et deuxième éléments de joint (86A,86B;186A,186B), et définissent la seconde cavité d'amortissement annulaire (88B;188B) entre les deuxième et troisième éléments de joint (86B,86C;186B,186C).
